# EUROPEAN PATENT APPLICATION

(11) **EP 4 585 448 A1**
(43) Date of publication of application: **16.07.2025**
(21) Application number: 24223401.1
(22) Date of filing: 27.12.2024
(51) Int. Cl.: B60L 53/12, H02J 50/10, B60L 53/20, B60L 55/00, B60L 7/10, B60L 58/18, H02J 7/00, B60L 58/22

(54) **POWER MANAGEMENT CIRCUIT FOR ELECTRIC AUXILIARY VEHICLE**

(30) Priority: 10.01.2024 TW 113101128
(71) Applicant: APh ePower Co., Ltd., Kaohsiung City 821 (TW)
(72) Inventor: SU, Hsiu-Hsien, 821 Kaohsiung City (TW); TZENG, Yun-Chi, 821 Kaohsiung City (TW); HUNG, Te-Chun, 821 Kaohsiung City (TW)
(74) Representative: Becker, Eberhard

(57) **Abstract**

The electric auxiliary vehicle (10, 20) includes batteries (BT1∼BTn), a motor (MT), and power receiving ports (P1∼Pn). The power management circuit (100, 200) includes a transformer (TR), an inductor (LB), primary circuits (110_1∼110_n, 210_1~210_n), a motor driving circuit (120, 220), and charging-and-discharging circuits (130_1∼130_n, 230_1∼230_n). The transformer (TR) includes primary windings (LP1∼LPn) and a secondary winding (LS). The inductor (LB) is coupled in parallel with the secondary winding (LS). Each primary circuit (110_1∼110_n, 210_1~210_n) provides wireless power (VWPT1∼VWPTn) from a power receiving port (P1∼Pn) to a primary winding (LP1∼LPn) at different time periods, and provides electric energy from the primary winding (LP1∼LPn) to the power receiving port (P1∼Pn) at different time periods. Each charging-and-discharging circuit (130_1∼130_n, 230_1∼230_n) provides electric energy from the inductor (LB) to a battery (BT1∼BTn) at different time periods, and provides battery electric energy (PB1∼PBn) from the battery (BT1∼BTn) to the inductor (LB) at different time periods.

## Description

### BACKGROUND

### Technical Field

The disclosure relates to a power management circuit, and particularly relates to a power management circuit for an electric auxiliary vehicle.

### Description of Related Art

Electric auxiliary vehicles (such as electric auxiliary wheelchairs, electric auxiliary bicycles, electric auxiliary scooters, or electric scooters) may use the electric energy stored in the battery to drive motors, so that the motors provide auxiliary power to assist the user's exertion. Electric auxiliary vehicles receive external power in a wireless or wired manner and use the external power to charge the battery.

However, current electric auxiliary vehicles do not have expandable batteries. In addition, current electric auxiliary vehicles do not provide expanded energy transmission technology corresponding to expandable batteries.

### SUMMARY

The disclosure provides a power management circuit for an electric auxiliary vehicle. The power management circuit has expanded energy transmission technology corresponding to an expandable battery.

A power management circuit of the disclosure is used in an electric auxiliary vehicle. The electric auxiliary vehicle includes a plurality of batteries, a motor, and a plurality of power receiving ports. The power management circuit includes a transformer, an inductor, a plurality of primary circuits, a motor driving circuit, and a plurality of charging-and-discharging circuits. The transformer includes a plurality of primary windings and a secondary winding. The inductor is coupled in parallel with the secondary winding. The plurality of primary circuits are coupled to the plurality of primary windings and the plurality of power receiving ports in a one-to-one manner. Each of the plurality of primary circuits provides wireless power from a corresponding power receiving port to a corresponding primary winding at different time periods, and provides electric energy from the corresponding primary winding to the corresponding power receiving port at different time periods. The motor driving circuit is coupled to the inductor and the motor. The motor driving circuit uses electric energy of the inductor to drive the motor and provides electric energy generated by the motor to the inductor. The plurality of charging-and-discharging circuits are coupled to the inductor and the motor driving circuit, and are coupled to the plurality of batteries in a one-to-one manner. Each of the plurality of charging-and-discharging circuits provides electric energy from the inductor to a corresponding battery at different time periods, and provides battery electric energy from the corresponding battery to the inductor at different time periods.

Based on the above, the power management circuit includes the plurality of primary circuits and the plurality of charging-and-discharging circuits. The plurality of primary circuits and the plurality of charging-and-discharging circuits transmit electric energy in a time-sharing manner. In this way, the power management circuit realizes an expanded energy transmission technology that may expand the battery. In addition, the power management circuit has a plurality of power transmission functions.

### BRIEF DESCRIPTION OF THE DRAWINGS

FIG. 1 is a schematic diagram of a power management circuit according to an embodiment of the disclosure.
FIG. 2 is a schematic circuit diagram of a power management circuit according to an embodiment of the disclosure.
FIG. 3 is a schematic diagram of an operation of a power management circuit according to an embodiment of the disclosure.
FIG. 4 is a signal waveform diagram based on FIG. 3.
FIG. 5 is a schematic diagram of an operation of a power management circuit according to an embodiment of the disclosure.
FIG. 6 is a signal waveform diagram based on FIG. 5.
FIG. 7 is a schematic diagram of an operation of a power management circuit according to an embodiment of the disclosure.
FIG. 8 is a signal waveform diagram based on FIG. 7.
FIG. 9 is a schematic diagram of an operation of a power management circuit according to an embodiment of the disclosure.
FIG. 10 is a signal waveform diagram based on FIG. 9.

### DESCRIPTION OF THE EMBODIMENTS

Some of the embodiments of the disclosure will be described in detail below with reference to the accompanying drawings. Components labeled with the same reference numerals shown in different drawings will be regarded as the same or similar components. The embodiments are only a part of the disclosure and do not disclose all the possible implementations of the disclosure. More specifically, the embodiments are only examples in the claims of the disclosure.

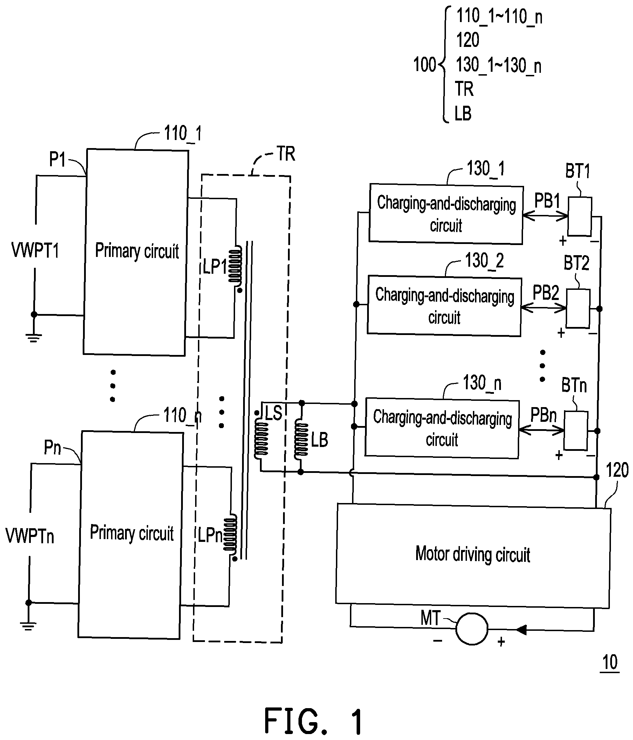

Referring to FIG. 1, FIG. 1 is a schematic diagram of a power management circuit according to an embodiment of the disclosure. In the embodiment, a power management circuit 100 is used in an electric auxiliary vehicle 10. The electric auxiliary vehicle 10 includes batteries BT1 to BTn, a motor MT, and power receiving ports P1 to Pn. The electric auxiliary vehicle 10 may be an electric auxiliary wheelchair, an electric auxiliary bicycle, an electric auxiliary scooter, or an electric motorcycle (but the disclosure is not limited thereto). In the embodiment, "n" is a positive integer greater than "2". In some embodiments, "n" may be a positive integer greater than "1". The number of batteries BT1 to BTn may be plural. The disclosure is not limited to the number of batteries BT1 to BTn.

In the embodiment, the power management circuit 100 includes a transformer TR, an inductor LB, primary circuits 110_1 to 110_n, a motor driving circuit 120, and charging-and-discharging circuits 130_1 to 130_n. The transformer TR includes primary windings LP1 to LPn and primary and a secondary winding LS. The inductor LB is coupled in parallel with the secondary winding LS.

In the embodiment, the primary circuits 110_1 to 110_n are coupled to the primary windings LP1 to LPn and the power receiving ports P1 to Pn in a one-to-one manner. Each of the primary circuits 110_1 to 110_n provides wireless power from a corresponding power receiving port to a corresponding primary winding at different time periods, and provides electric energy from the corresponding primary winding to the corresponding power receiving port at different time periods.

For example, the primary circuit 110_1 is coupled to the primary winding LP1 and the power receiving port P1. Similarly, the primary circuit 110_n is coupled to the primary winding LPn and the power receiving port Pn. The primary circuit 110_1 provides a wireless power VWPT1 from the power receiving port P1 to the primary winding LP1 during a first time period of a mode (for example, power charging mode). The primary circuit 110_1 provides electric energy from the primary winding LP1 to the power receiving port P1 during a first time period of another mode (for example, feedback mode). Similarly, the primary circuit 110_n provides a wireless power VWPTn from the power receiving port Pn to the primary winding LPn during an nth time period of a mode (for example, power charging mode). The primary circuit 110_n provides electric energy from the primary winding LPn to the power receiving port Pn during an nth time period of another mode (for example, feedback mode).

In the embodiment, the motor driving circuit 120 is coupled to the inductor LB and the motor MT. The motor driving circuit 120 uses electric energy of the inductor LB to drive the motor MT, and provides electric energy generated by the motor MT to the inductor LB. For example, the motor driving circuit 120 uses the electric energy of the inductor LB to drive the motor MT in a mode (for example, driving mode). The motor driving circuit 120 provides the electric power generated by the motor MT to the inductor LB in another mode. In addition, the motor driving circuit 120 is also coupled to negative electrodes of the batteries BT1 to BTn.

In the embodiment, the charging-and-discharging circuits 130_1 to 130_n are coupled to the inductor LB and the motor driving circuit 120, and are coupled to the batteries BT1 to BTn in a one-to-one manner. Each of the charging-and-discharging circuits 130_1 to 130_n provides electric energy from the inductor LB to a corresponding battery at different time periods, and provides battery electric energy from the corresponding battery to the inductor LB at different time periods.

For example, the charging-and-discharging circuit 130_1 is coupled to the inductor LB, the motor driving circuit 120, and the battery BT1. The charging-and-discharging circuit 130_2 is coupled to the inductor LB, the motor driving circuit 120, and the battery BT2. Similarly, the charging-and-discharging circuit 130_n is coupled to the inductor LB, the motor driving circuit 120, and the battery BTn. The charging-and-discharging circuit 130_1 provides electric energy from the inductor LB to the battery BTn during a first time period of a mode (for example, power charging mode). The charging-and-discharging circuit 130_1 provides a battery electric energy PB1 from the battery BT1 to the inductor LB during the first time period of another mode (for example, driving mode or feedback mode). The charging-and-discharging circuit 130_2 provides electric energy from the inductor LB to the battery BT2 during a second time period of a mode (for example, power charging mode). The charging-and-discharging circuit 130_2 provides a battery electric energy PB2 from the battery BT2 is provided to the inductor LB during a second time period of another mode (for example, driving mode or feedback mode). Similarly, the charging-and-discharging circuit 130_n provides electric energy from the inductor LB to the battery BTn during an nth time period of a mode (for example, power charging mode). The charging-and-discharging circuit 130_n provides a battery electric energy PBn from the battery BTn to the inductor LB during an nth time period of another mode (for example, driving mode or feedback mode).

It is worth mentioning here that the primary circuits 110_1 to 110_n and the charging-and-discharging circuits 130_1 to 130_n of the power management circuit 100 transmit electric energy in a time-sharing manner. In this way, the power management circuit 100 implements an expanded energy transmission technology that may expand the battery. In addition, the power management circuit 100 has a plurality of power transmission functions.

In the embodiment, the batteries BT1 to BTn are respectively implemented by aluminum-ion batteries, but the disclosure is not limited thereto.

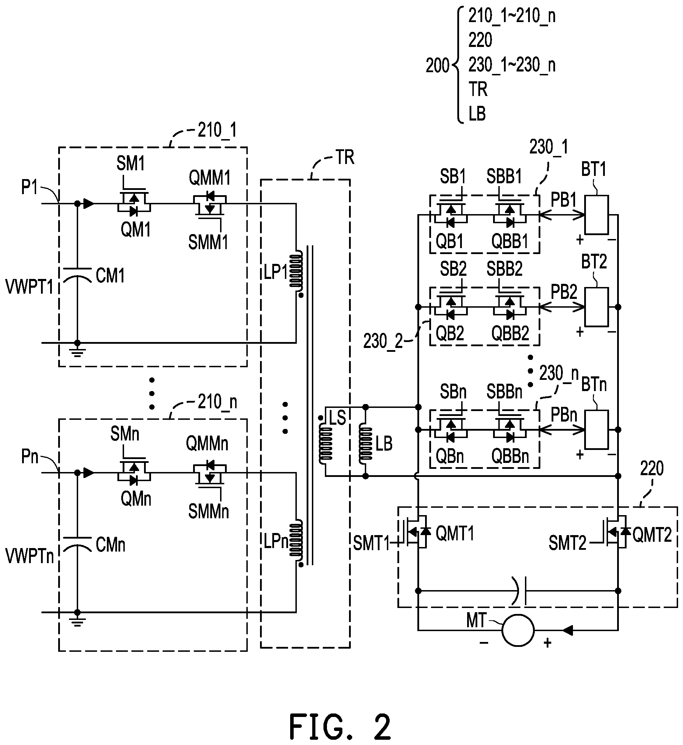

Referring to FIG. 2, FIG. 2 is a schematic circuit diagram of a power management circuit according to an embodiment of the disclosure. In the embodiment, a power management circuit 200 is used in an electric auxiliary vehicle 20. The electric auxiliary vehicle 20 includes the batteries BT1 to BTn, the motor MT, and the power receiving ports P1 to Pn. The power management circuit 200 includes the transformer TR, the inductor LB, primary circuits 210_1 to 210_n, a motor driving circuit 220, and charging-and-discharging circuits 230_1 to 230_n. The transformer TR includes the primary windings LP1 to LPn and the secondary winding LS. The inductor LB is coupled in parallel with the secondary winding LS.

In the embodiment, the primary circuit 210_1 includes power transistors QM1 and QMM1 and a capacitor CM1. A source of the power transistor QM1 is coupled to the power receiving port P1. A gate of the power transistor QM1 receives a switching signal SM1. A drain of the power transistor QMM1 is coupled to a drain of the power transistor QM1. A source of the power transistor QMM1 is coupled to a first end of the primary winding LP1. A gate of the power transistor QMM1 receives a switching signal SMM1. A capacitor CM1 is coupled between the power receiving port P1 and a second end of the primary winding LP1.

It should be noted that the drain of the power transistor QMM1 is coupled to the drain of the power transistor QM1. A cathode of a diode of the power transistor QMM1 is coupled to a cathode of a diode of the power transistor QM1. Therefore, when the power transistors QM1 and QMM1 are both disconnected, the primary circuit 210_1 may have a better electrical isolation effect.

Similarly, the primary circuit 210_n includes power transistors QMn and QMMn and a capacitor CMn. A source of the power transistor QMn is coupled to the power receiving port Pn. A gate of the power transistor QMn receives a switching signal SMn. A drain of the power transistor QMMn is coupled to a drain of the power transistor QMn. A source of the power transistor QMMn is coupled to a first end of the primary winding LPn. A gate of the power transistor QMMn receives a switching signal SMMn. The capacitor CMn is coupled between the power receiving port Pn and a second end of the primary winding LPn.

In the embodiment, the motor driving circuit 220 includes a capacitor CMT and driving power transistors QMT1 and QMT2. The capacitor CMT and the motor MT are electrically connected in parallel. A drain of the driving power transistor QMT1 is coupled to a first end of the inductor LB. A source of the driving power transistor QMT1 is coupled to one end of the capacitor CMT. A gate of the driving power transistor QMT1 receives a switching signal SMT1. A source of the driving power transistor QMT2 is coupled to the negative electrodes of the batteries BT1 to BTn and a second end of the inductor LB. A drain of the driving power transistor QMT2 is coupled to the other end of the capacitor CMT. A gate of the driving power transistor QMT2 receives a switching signal SMT2.

In the embodiment, the charging-and-discharging circuit 230_1 includes power transistors QB1 and QBB1. A drain of the power transistor QB1 is coupled to the first end of the inductor LB. A gate of the power transistor QB1 receives a switching signal SB1. A source of the power transistor QBB1 is coupled to a source of the power transistor QB1. A drain of the power transistor QBB1 is coupled to a positive electrode of the battery BT1. A gate of the power transistor QBB1 receives a switching signal SBB1.

It should be noted that the source of the power transistor QBB1 is coupled to the source of the power transistor QB1. An anode of a diode of the power transistor QBB1 is coupled to an anode of a diode of the power transistor QB1. Therefore, when the power transistors QB1 and QBB1 are both disconnected, the charging-and-discharging circuit 230_1 may have a better electrical isolation effect.

The charging-and-discharging circuit 230_2 includes power transistors QB2 and QBB2. A drain of the power transistor QB2 is coupled to the first end of the inductor LB. A gate of the power transistor QB2 receives a switching signal SB2. A source of the power transistor QBB2 is coupled to a source of the power transistor QB2. A drain of the power transistor QBB2 is coupled to a positive electrode of the battery BT2. A gate of the power transistor QBB2 receives a switching signal SBB2.

Similarly, the charging-and-discharging circuit 230_n includes power transistors QBn and QBBn. A drain of the power transistor QBn is coupled to the first end of the inductor LB. A gate of the power transistor QBn receives a switching signal SBn. A source of the power transistor QBBn is coupled to a source of the power transistor QBn. A drain of the power transistor QBBn is coupled to a positive electrode of the battery BTn. A gate of the power transistor QBBn receives a switching signal SBBn.

The operation details of the power management circuit 200 in different modes will be illustrated below with examples.

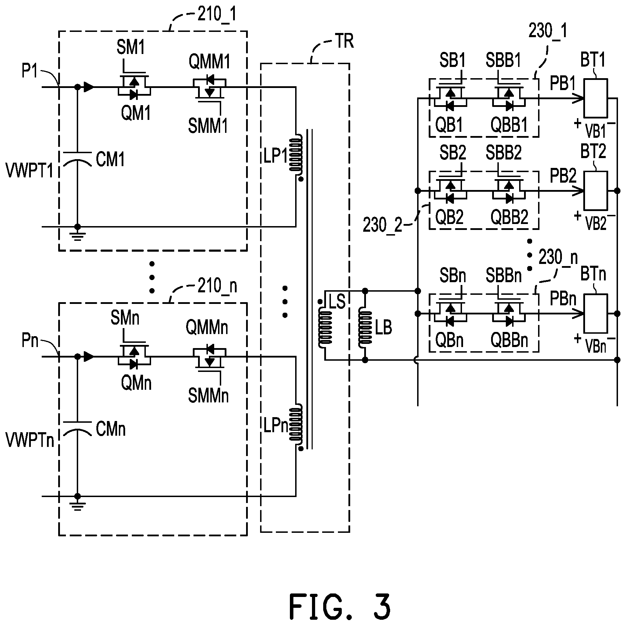

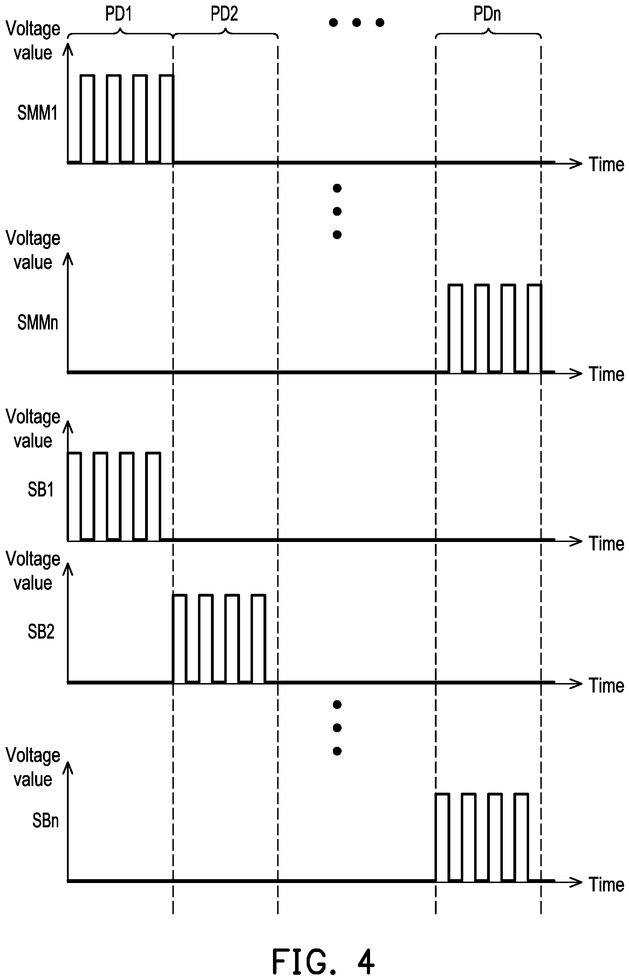

Referring to FIG. 2, FIG. 3, and FIG. 4 at the same time, FIG. 3 is a schematic diagram of an operation of a power management circuit according to an embodiment of the disclosure, and FIG. 4 is a signal waveform diagram based on FIG. 3. The embodiment illustrates the operation of the power management circuit 200 in the power charging mode. In the embodiment, the driving power transistors QMT1 and QMT2 are turned off in the power charging mode. Therefore, the motor driving circuit 220 does not operate.

During a period PD1 of the power charging mode, the switching signal SMM1 and the switching signal SB1 have a duty cycle. The duty cycle is greater than 0% and less than 100%. The remaining switching signals have low voltage values. During the period PD1, the power transistor QMM1 of the primary circuit 210_1 provides the wireless power VWPT1 from the power receiving port P1 to the primary winding LP1 based on the duty cycle of the switching signal SMM1. During the period PD1, the wireless power VWPT1 may be provided to the primary winding LP1 through the diode of the turned-off power transistor QM1 and the turned-on power transistor QMM1. During the period PD1, the transformer TR converts the electric energy of the primary winding LP1 to the inductor LB. The electric energy stored in the inductor LB has a current value IB. During the period PD1, the power transistor QB1 of the charging-and-discharging circuit 230_1 provides the electric energy stored in the inductor LB to the battery BT1 based on the duty cycle of the switching signal SB1. During the period PD1, the electric energy stored in the inductor LB may be provided to the battery BT1 through the turned-on power transistor QB1 and the diode of the turned-off power transistor QBB1. The remaining primary circuits and the remaining charging-and-discharging circuits do not operate. In other words, during the period PD1, the power management circuit 200 uses the wireless power VWPT1 to charge the battery BT1.

During the period PD1, the switching signal SMM1 and the switching signal SB1 are complementary to each other.

During a period PD2 of the power charging mode, the switching signal SB2 has a duty cycle. During the period PD2, the power transistor QB2 of the charging-and-discharging circuit 230_2 provides the electric energy stored in the inductor LB to the battery BT2 based on the duty cycle of the switching signal SB2. In other words, during the period PD2, the power management circuit 200 uses the power stored in the inductor LB to charge the battery BT2.

During a period PDn of the power charging mode, the switching signal SMMn and the switching signal SBn have duty cycles. The remaining switching signals have low voltage values. During the period PDn, the power transistor QMMn of the primary circuit 210_n provides the wireless power VWPTn from the power receiving port Pn to the primary winding LPn based on the duty cycle of the switching signal SMMn. During the period PDn, the wireless power VWPTn has a current value IMn. During the period PDn, the transformer TR converts the electric energy of the primary winding LPn to the inductor LB. The electric energy stored in the inductor LB has the current value IB. During the period PDn, the power transistor QBn of the charging-and-discharging circuit 230_n provides the electric energy stored in the inductor LB to the battery BTn based on the duty cycle of the switching signal SBn. The remaining primary circuits and the remaining charging-and-discharging circuits do not operate. In other words, during the period PDn, the power management circuit 200 uses the wireless power VWPTn to charge the battery BTn.

During the period PDn, the switching signal SMMn and the switching signal SBn are complementary to each other.

It is worth mentioning here that the power management circuit 200 may use the power receiving ports P1 to Pn to receive at least one wireless power to charge at least one of the batteries BT1 to BTn.

In addition, the switching signals SMM1 to SMMn and the switching signals SB1 to SBn are pulse-width modulation (PWM) signals respectively. For example, the higher the duty cycle of the switching signal SMM1, the higher the power of the wireless power VWPT1. For example, when the duty cycle of the switching signal SMM1 is lower, the power of the wireless power VWPT1 is lower. For example, the higher the duty cycle of the switching signal SB1, the higher the charging current value of the battery electric energy PB1. For example, the lower the duty cycle of the switching signal SB1, the lower the charging current value of the battery electric energy PB1. Therefore, the power management circuit 200 may determine the duty cycle of the switching signals SB1 to SBn according to voltage values VB1 to VBn of the batteries BT1 to BTn. Therefore, the power management circuit 200 avoids overcharging conditions.

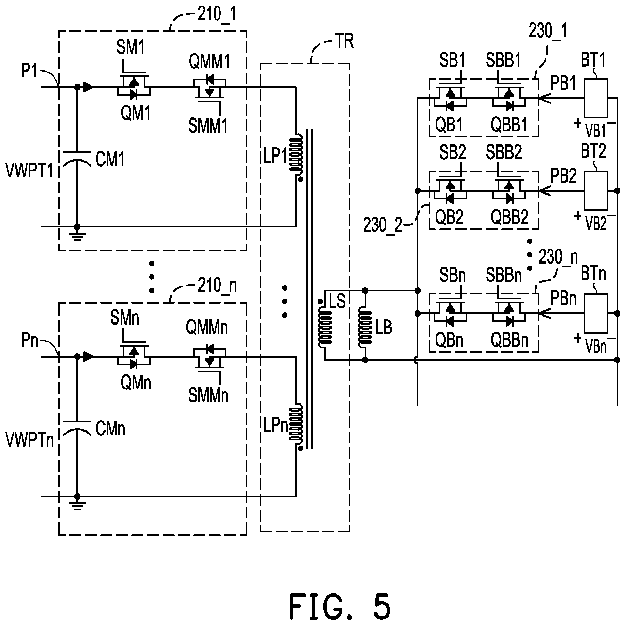

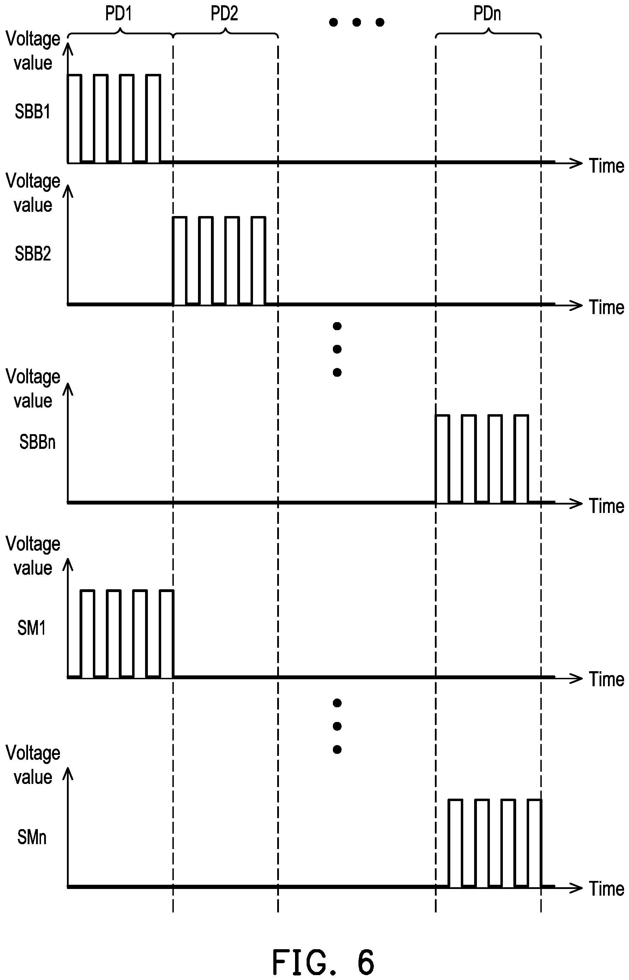

Refer to FIG. 2, FIG. 5, and FIG. 6 at the same time, FIG. 5 is a schematic diagram of an operation of a power management circuit according to an embodiment of the disclosure, and FIG. 6 is a signal waveform diagram based on FIG. 5. The embodiment illustrates the operation of the power management circuit 200 in the feedback mode. In the embodiment, the driving power transistors QMT1 and QMT2 are turned off in the feedback mode. Therefore, the motor driving circuit 220 does not operate.

During the period PD1 of the feedback mode, the switching signal SM1 and the switching signal SBB1 have duty cycles. The duty cycle is greater than 0% and less than 100%. The remaining switching signals have low voltage values. During the period PD1, the power transistor QBB1 of the charging-and-discharging circuit 230_1 provides the battery electric energy PB1 stored in the battery BT1 to the inductor LB based on the duty cycle of the switching signal SBB1. During the period PD1, the battery electric energy PB1 stored in the battery BT1 may be provided to the inductor LB through the turned-on power transistor QBB1 and the diode of the turned-off power transistor QB1. The transformer TR converts the electric energy stored in the inductor LB to the primary windings LP1 to LPn. The power transistor QM1 of the primary circuit 210_1 provides the electric energy in the primary winding LP1 to the power receiving port P1 based on the duty cycle of the switching signal SM1. During the period PD1, the power in the primary winding LP1 may be provided to the power receiving port P1 through the diode of the turned-off power transistor QMM1 and the turned-on power transistor QM1. The remaining primary circuits and the remaining charging-and-discharging circuits do not operate. In other words, during the period PD1, the power management circuit 200 may feed back the battery electric energy PB1 stored in the battery BT1 to the power receiving port P1.

During the period PD1, the switching signal SBB1 and the switching signal SM1 are complementary to each other.

During the period PD2 of the power charging mode, the switching signal SBB2 has a duty cycle. During the period PD2, the power transistor QBB2 of the charging-and-discharging circuit 230_2 provides the battery electric energy PB2 stored in the battery BT2 to the inductor LB based on the duty cycle of the switching signal SBB2. In other words, during the period PD2, the power management circuit 200 provides the battery electric energy PB2 stored in the battery BT2 to the inductor LB.

During the period PDn of the power charging mode, the switching signal SBBn and the switching signal SMn have duty cycles. The remaining switching signals have low voltage values. During the period PDn, the power transistor QBBn of the charging-and-discharging circuit 230_n provides the battery electric energy PBn stored in the battery BTn to the inductor LB based on the duty cycle of the switching signal SBBn. The electric energy stored in the inductor LB has the current value IB. The transformer TR converts the electric energy stored in the inductor LB to the primary windings LP1 to LPn. The power transistor QMn of the primary circuit 210_n provides the electric energy in the primary winding LPn to the power receiving port Pn based on the duty cycle of the switching signal SMn. The remaining primary circuits and the remaining charging-and-discharging circuits do not operate. In other words, during the period PDn, the power management circuit 200 may feed back the battery electric energy PBn stored in the battery BTn to the power receiving port Pn.

During the period PDn, the switching signal SBBn and the switching signal SMn are complementary to each other.

In the embodiment, taking the battery BT1 as an example, when the voltage value VB1 of the battery BT1 is low, the duty cycle of the switching signal SBBn is increased. When the voltage value VB1 of the battery BT1 is high, the duty cycle of the switching signal SBBn is reduced. Therefore, during the period PD1 of the driving mode, the power management circuit 200 may provide a stable voltage value VM to the power receiving port P1.

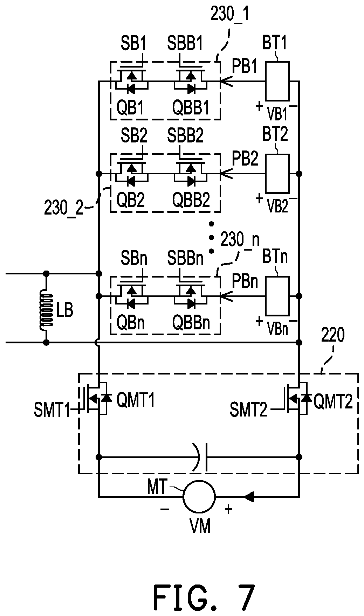

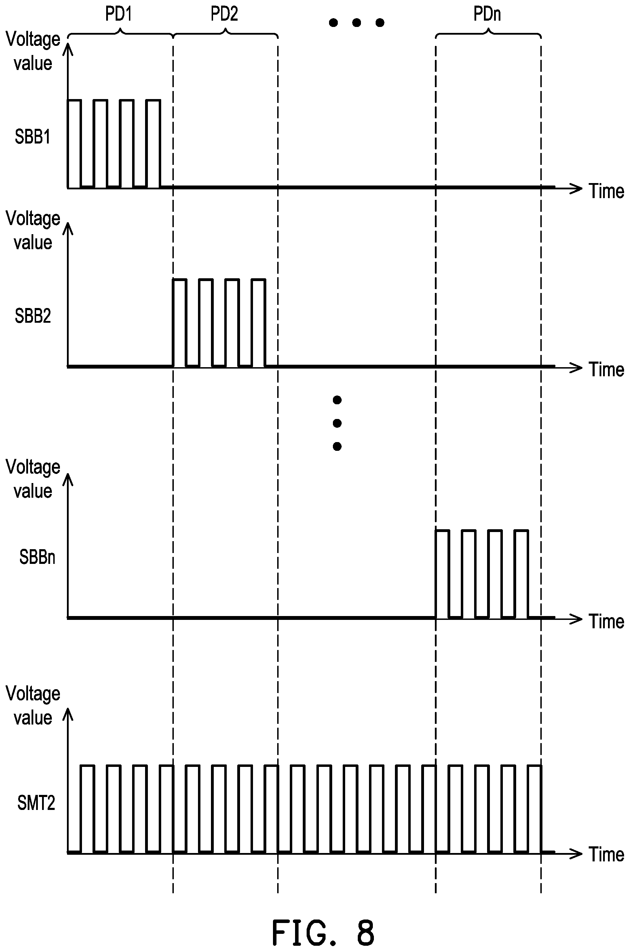

Referring to FIG. 2, FIG. 7, and FIG. 8 at the same time, FIG. 7 is a schematic diagram of an operation of a power management circuit according to an embodiment of the disclosure, and FIG. 8 is a signal waveform diagram based on FIG. 7. The embodiment illustrates the operation of the power management circuit 200 in the driving mode. In the embodiment, the switching signals SM1 to SMn and SMM1 to SMMn are disconnected in the driving mode. Therefore, the primary circuits 210_1 to 210_n do not operate.

During the period PD1 of the driving mode, the switching signal SBB1 and the switching signal SMT2 have duty cycles. The duty cycle is greater than 0% and less than 100%. The remaining switching signals have low voltage values. During the period PD1, the power transistor QBB1 of the charging-and-discharging circuit 230_1 provides the battery electric energy PB1 stored in the battery BT1 to the inductor LB based on the duty cycle of the switching signal SBB1. During the period PD1, the battery electric energy PB1 stored in the battery BT1 may be provided to the inductor LB through the turned-on power transistor QBB1 and the diode of the turned-off power transistor QB1. The remaining charging-and-discharging circuits do not operate. The driving power transistor QMT2 of the motor driving circuit 220 provides the electric energy stored in the inductor LB to the motor MT based on the duty cycle of the switching signal SMT2. In the embodiment, the electric energy stored in the inductor LB may drive the motor MT through a path formed by the turned-on driving power transistor QMT2, the motor MT, the capacitor CMT, and the diode of the turned-off driving power transistor QMT1. In other words, during the period PD1, the power management circuit 200 may use the battery electric energy PB1 stored in the battery BT1 to drive the motor MT.

During the period PD1, the switching signal SBB1 and the switching signal SMT2 are complementary to each other.

During the period PD2 of the driving mode, the switching signal SBB2 and the switching signal SMT2 have duty cycles. The remaining switching signals have low voltage values. During the period PD2, the power transistor QBB2 of the charging-and-discharging circuit 230_2 provides the battery electric energy PB2 stored in the battery BT2 to the inductor LB based on the duty cycle of the switching signal SBB2. The electric energy stored in the inductor LB has the current value IB. The remaining charging-and-discharging circuits do not operate. The driving power transistor QMT2 of the motor driving circuit 220 provides the electric energy stored in the inductor LB to the motor MT based on the duty cycle of the switching signal SMT2. In other words, during the period PD2, the power management circuit 200 may use the battery electric energy PB2 stored in the battery BT2 to drive the motor MT.

During the period PD2, the switching signal SBB2 and the switching signal SMT2 are complementary to each other.

Similarly, during the period PDn of the driving mode, the switching signal SBBn and the switching signal SMT2 have duty cycles. The remaining switching signals have low voltage values. During the period PDn, the power transistor QBBn of the charging-and-discharging circuit 230_n provides the battery electric energy PBn stored in the battery BTn to the inductor LB based on the duty cycle of the switching signal SBBn. The electric energy stored in the inductor LB has the current value IB. The remaining charging-and-discharging circuits do not operate. The driving power transistor QMT2 of the motor driving circuit 220 provides the electric energy stored in the inductor LB to the motor MT based on the duty cycle of the switching signal SMT2. In other words, during the period PDn, the power management circuit 200 may use the battery electric energy PBn stored in the battery BTn to drive the motor MT.

During the period PDn, the switching signal SBBn and the switching signal SMT2 are complementary to each other.

In the embodiment, taking the battery BT1 as an example, when the voltage value VB1 of the battery BT1 is low, the duty cycle of the switching signal SBBn is increased. When the voltage value VB1 of the battery BT1 is high, the duty cycle of the switching signal SBBn is reduced. Therefore, during the period PD1 of the driving mode, the power management circuit 200 may perform voltage stabilization driving of the motor MT.

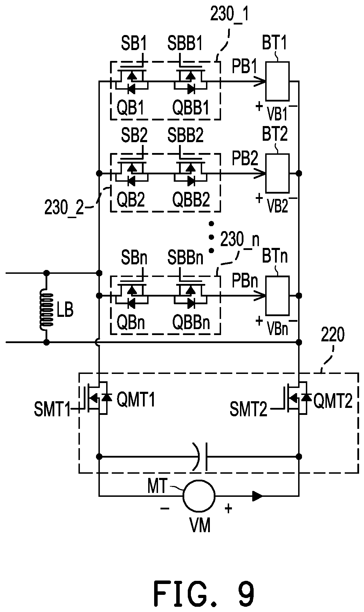

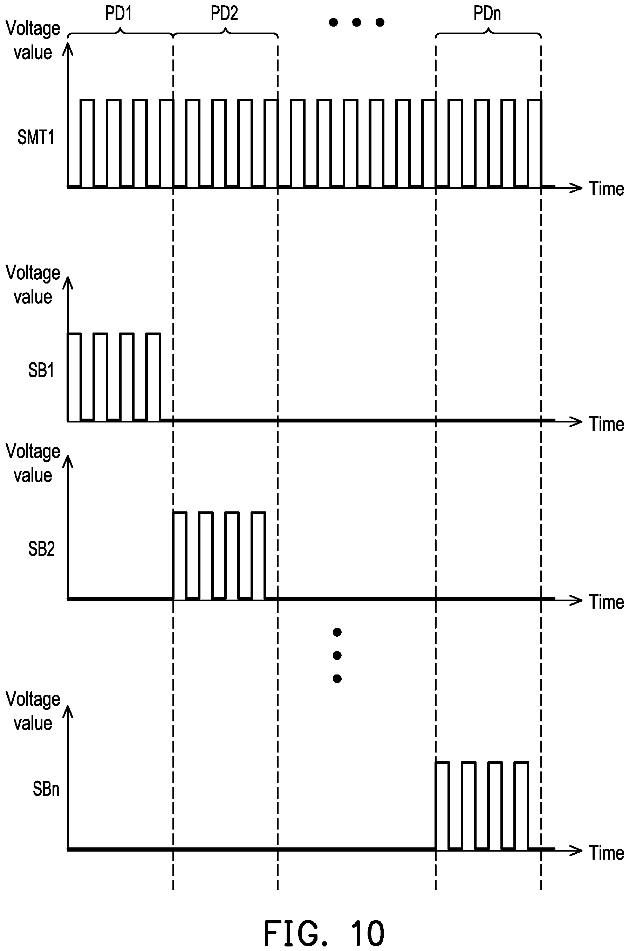

Referring to FIG. 2, FIG. 9, and FIG. 10 at the same time, FIG. 9 is a schematic diagram of an operation of a power management circuit according to an embodiment of the disclosure, and FIG. 10 is a signal waveform diagram based on FIG. 9. The embodiment illustrates the operation of the power management circuit 200 in the motor charging mode. In the embodiment, the switching signals SM1 to SMn and SMM1 to SMMn are disconnected in the motor charging mode. Therefore, the primary circuits 210_1 to 210_n do not operate.

For example, during a riding period, when the electric auxiliary vehicle 10 travels downhill, an electromotive force of the motor MT may provide larger electric energy. When at least one of the voltage values VB1 to VBn of the batteries BT1 to BTn is lower than the voltage value VM of an electric energy PM of the motor MT, the power management circuit 100 may charge at least one of the batteries BT1 to BTn using the electric energy PM of the motor MT in the second operating mode. Therefore, the endurance of the electric auxiliary vehicle 10 during the riding period may be extended.

In the motor charging mode, the switching signal SB1 and the switching signal SMT1 have duty cycles. The duty cycle is greater than 0% and less than 100%. The remaining switching signals have low voltage values. The driving power transistor QMT1 of the motor driving circuit 220 provides the electric energy generated by the motor MT to the inductor LB based on the duty cycle of the switching signal SMT1. The motor driving circuit 220 provides the electric energy generated by the motor MT to Inductor LB through a path formed by the turned-on driving power transistor QMT1, the motor MT, the capacitor CMT, and the diode of the turned-off driving power transistor QMT2.

During the period PD1 of the motor charging mode, the power transistor QB1 of the charging-and-discharging circuit 230_1 provides the electric energy stored in the inductor LB to the battery BT1 based on the duty cycle of the switching signal SB 1. During the period PD1, the electric energy stored in the inductor LB may be provided to the battery BT1 through the turned-on power transistor QB1 and the diode of the turned-off power transistor QBB1. The remaining charging-and-discharging circuits do not operate. In other words, the charging-and-discharging circuit 230_1 uses the electric energy stored in the inductor LB to charge the battery BT1 during the period PD1.

During the period PD2 of the motor charging mode, the power transistor QB2 of the charging-and-discharging circuit 230_2 provides the electric energy stored in the inductor LB to the battery BT2 based on the duty cycle of the switching signal SB2. The remaining charging-and-discharging circuits do not operate. In other words, the charging-and-discharging circuit 230_2 uses the electric energy stored in the inductor LB to charge the battery BT2 during the period PD2. During the period PDn of the motor charging mode period, the power transistor QBn of the charging-and-discharging circuit 230_n provides the electric energy stored in the inductor LB to the battery BTn based on the duty cycle of the switching signal SBn. The remaining charging-and-discharging circuits do not operate. In other words, the charging-and-discharging circuit 230_n uses the electric energy stored in the inductor LB to charge the battery BTn during the period PDn.

To sum up, the power management circuit includes the plurality of primary circuits and the plurality of charging-and-discharging circuits. The plurality of primary circuits and the plurality of charging-and-discharging circuits transmit electric energy in a time-sharing manner. In this way, the power management circuit realizes an expanded energy transmission technology that may expand the battery. In addition, the power management circuit has a plurality of power transmission functions. Furthermore, the power management circuit may charge the plurality of batteries using wireless power from the power receiving port in a time-sharing manner. The power management circuit may charge the plurality of batteries using the electric energy generated by the motor in a time-sharing manner. The power management circuit may feed back the battery electric energy stored in the plurality of batteries to the power receiving port in a time-sharing manner. The power management circuit may use the battery electric energy stored in the plurality of batteries to drive the motor in a time-sharing manner.

## Claims

1. A power management circuit (100, 200) for an electric auxiliary vehicle (10, 20), wherein the electric auxiliary vehicle (10, 20) comprises a plurality of batteries (BT1~BTn), a motor (MT), and a plurality of power receiving ports (P1~Pn), and the power management circuit (100, 200) comprises:
a transformer (TR), comprising a plurality of primary windings (LP1~LPn) and a secondary winding (LS);
an inductor (LB), coupled in parallel with the secondary winding (LS);
a plurality of primary circuits (110_1~110_n, 210_1~210_n), coupled correspondingly with the primary windings (LP1~LPn) and the power receiving ports (P1~Pn) in a one-to-one manner, wherein each of the plurality of primary circuits (110_1~110_n, 210_1~210_n) is configured to provide wireless power (VWPT1~VWPTn) from a corresponding power receiving port (P1~Pn) to a corresponding primary winding (LP1~LPn) at different time periods, and to provide electric energy from the corresponding primary winding (LP1-LPn) to the corresponding power receiving port (P1~Pn) at different time periods; and
a motor driving circuit (120, 220), coupled between the inductor (LB) and the motor (MT), and configured to use electric energy from the inductor (LB) to drive the motor (MT), and to provide electric energy generated by the motor (MT) to the inductor (LB); and
a plurality of charging-and-discharging circuits (130_1~130_n, 230_1~230_n), coupled to the inductor (LB) and the motor driving circuit (120, 220), and correspondingly coupled to the batteries (BT1~BTn) in a one-to-one manner, wherein each of the plurality of charging-and-discharging circuits (130_1~130_n, 230_1~230_n) is configured to provide electric energy from the inductor (LB) to a corresponding battery (BT1~BTn) at different time periods, and to provide battery electric energy (PB1~PBn) from the corresponding battery (BT1~BTn) to the inductor (LB) at different time periods.

2. The power management circuit (100, 200) according to claim 1, wherein the primary circuits (110_1~110_n, 210_1~210_n) comprise:
a first primary circuit (110_1, 210_1), coupled to a first power receiving port (P1) among the power receiving ports (P1~Pn) and a first primary winding (LP1) among the primary windings (LP1~LPn), and configured to provide wireless power (VWPT1~VWPTn) from the first power receiving port (P1) to the first primary winding (LP1) during a first time period (PD1) of a power charging mode; and
a second primary circuit, coupled to a second power receiving port among the power receiving ports (P1~Pn) and a second primary winding among the primary windings (LP1~LPn), and configured to provide wireless power (VWPT1~VWPTn) from the second power receiving port to the second primary winding during a second time period (PD2) of the power charging mode.

3. The power management circuit (100, 200) according to claim 2, wherein
the first primary circuit (110_1, 210_1) provides electric energy from the first primary winding (LP1) to the first power receiving port (P1) during a first time period (PD1) of a feedback mode, and
the second primary circuit provides electric energy from the second primary winding to the second power receiving port during a second time period (PD2) of the feedback mode.

4. The power management circuit (100, 200) according to claim 2, wherein the first primary circuit (110_1, 210_1) comprises:
a first power transistor (QM1, QMM1), wherein a source of the first power transistor (QM1, QMM1) is coupled to the first power receiving port (P1), and a gate of the first power transistor (QM1, QMM1) receives a first switching signal (SM1, SMM1);
a second power transistor, wherein a drain of the second power transistor is coupled to a drain of the first power transistor (QM1, QMM1), a source of the second power transistor is coupled to a first end of the first primary winding (LP1), and a gate of the second power transistor receives a second switching signal; and
a capacitor (CM1~CMn), coupled between the first power receiving port (P1) and a second end of the first primary winding (LP1).

5. The power management circuit (100, 200) according to claim 1, wherein the charging-and-discharging circuits (130_1~130_n, 230_1~230_n) comprise:
a first charging-and-discharging circuit (130_1, 230_1), coupled to the inductor (LB), the motor driving circuit (120, 220), and a positive electrode of a first battery (BT1) among the batteries (BT1~BTn); and
a second charging-and-discharging circuit, coupled to the inductor (LB), the motor driving circuit (120, 220), and a positive electrode of a second battery (BT2) among the batteries (BT1~BTn).

6. The power management circuit (100, 200) according to claim 5, wherein
the first charging-and-discharging circuit (130_1, 230_1) provides electric energy from the inductor (LB) to the first battery (BT1) during a first time period (PD1) of a power charging mode, and
the second charging-and-discharging circuit provides electric energy from the inductor (LB) to the second battery (BT2) during a second time period (PD2) of the power charging mode.

7. The power management circuit (100, 200) according to claim 5, wherein:
the first charging-and-discharging circuit (130_1, 230_1) provides battery electric energy (PB1~PBn) of the first battery (BT1) to the inductor (LB) during a first time period (PD1) of a feedback mode, and
the second charging-and-discharging circuit provides battery electric energy (PB1~PBn) of the second battery (BT2) to the inductor (LB) during a second time period (PD2) of the feedback mode.

8. The power management circuit (100, 200) according to claim 5, wherein the first charging-and-discharging circuit (130_1, 230_1) comprises:
a first power transistor (QB1, QBB1), wherein a drain of the first power transistor (QB1, QBB1) is coupled to a first end of the inductor (LB), and a gate of the first power transistor (QB1, QBB1) receives a first switching signal (SBB1); and
a second power transistor, wherein a source of the second power transistor is coupled to a source of the first power transistor, a drain of the second power transistor is coupled to a positive electrode of the first battery (BT1), and a gate of the second power transistor receives a second switching signal.

9. The power management circuit (100, 200) according to claim 5, wherein:
the first charging-and-discharging circuit (130_1, 230_1) provides battery electric energy (PB1~PBn) of the first battery (BT1) to the inductor (LB) during a first time period (PD1) of a driving mode, and
the second charging-and-discharging circuit provides battery electric energy (PB1~PBn) of the first battery (BT1) to the inductor (LB) during the first time period (PD2) of the driving mode.

10. The power management circuit (100, 200) according to claim 9, wherein the motor driving circuit (120, 220) uses the electric energy of the inductor (LB) to drive the motor (MT) in the driving mode.

11. The power management circuit (100, 200) according to claim 1, wherein the motor driving circuit (120, 220) comprises:
a capacitor (CMT), electrically connected in parallel with the motor (MT);
a first driving power transistor (QMT1), wherein a drain of the first driving power transistor (QMT1) is coupled to a first end of the inductor (LB), a source of the first driving power transistor (QMT1) is coupled to one end of the capacitor (CMT), and a gate of the first driving power transistor (QMT1) receives a first switching signal (SMT1); and
a second driving power transistor (QMT2), wherein a source of the second driving power transistor (QMT2) is coupled to negative electrodes of the batteries (BT1~BTn) and a second end of the inductor (LB), a drain of the second driving power transistor (QMT2) is coupled to the other end of the capacitor (CMT), and a gate of the second driving power transistor (QMT2) receives a second switching signal (SMT2).

12. The power management circuit (100, 200) according to claim 1, wherein the batteries (BT1~BTn) are respectively implemented by aluminum-ion batteries.
